Europäisches Patentamt

European Patent Office

Office européen des brevets

(11) Veröffentlichungsnummer: **0 391 073**
**A2**

(12) **EUROPÄISCHE PATENTANMELDUNG**

(21) Anmeldenummer: **90104096.4**

(51) Int. Cl.5: **B23B 29/04**

(22) Anmeldetag: **02.03.90**

(30) Priorität: **06.04.89 DE 8904239 U**

(43) Veröffentlichungstag der Anmeldung:
**10.10.90 Patentblatt 90/41**

(84) Benannte Vertragsstaaten:
**DE ES FR GB IT**

(71) Anmelder: **Zinner GmbH**
**Karl-Martell-Strasse 35**
**D-8500 Nürnberg 80(DE)**

(72) Erfinder: **Zinner, Karl**
**Uehlfelder Strasse 21**
**D-8500 Nürnberg 80(DE)**

(74) Vertreter: **Patentanwälte Czowalla . Matschkur**
**& Partner**
**Dr.-Kurt-Schumacher-Strasse 23 Postfach**
**9109**
**D-8500 Nürnberg 11(DE)**

(54) **Werkzeug-Grundhalter zur Befestigung in einer Aufnahme-Aussparung eines Werkzeugträgers, insbesondere Revolverkopfes.**

(57) Werkzeug-Grundhalter zur Befestigung in einer Aufnahme-Aussparung eines Werkzeugträgers, insbesondere Revolverkopfes, mit Basisteil und daran durch ein oder mehrere Spannmittel befestigbarem Spannteil, zwischen denen das Werkzeug geklemmt ist, wobei eine radial zum Werkzeugträger gerichtete Klemmkraftkomponente mittels wenigstens einer eine Keilrampe für die Spannmittel bildenden Anlagefläche zwischen Basis- und Spannteil erzeugt wird, wobei die Anlagefläche innerhalb einer Vertiefung im Basisteil angeordnet ist.

FIG. 3

EP 0 391 073 A2

## Werkzeug-Grundhalter zur Befestigung in einer Aufnahme-Aussparung eines Werkzeugträgers, insbesondere Revolverkopfes

Die Erfindung betrifft einen Werkzeug-Grundhalter zur Befestigung in einer Aufnahme-Aussparung eines Werkzeugträgers, insbesondere Revolverkopfes, mit Basisteil und daran durch ein oder mehrere Spannmittel befestigbarem Spannteil, zwischen denen das Werkzeug geklemmt ist, wobei eine radial zum Werkzeugträger gerichtet Klemmkraftkomponente mittels wenigstens einer eine Keilrampe für die Spannmittel bildenden Anlagefläche zwischen Basis- und Spannteil erzeugt wird.

Bei Grundhaltern etwa dieser Gattung wird die Keilrampe zur Erzeugung der Radialkomponente der Klemmkraft auf das Werkzeug durch eine sich schräg erhebende Erhöhung auf der Oberfläche des Basisteils gebildet, allerdings mit dem Nachteil eines zusätzlichen Materialverbrauchs für die Erhöhung bei der Herstellung. Bei Revolverdrehmaschinen ist es üblich, den Basisteil des Grundhalters mittels einer Klemmschraube in die Aufnahme-Aussparung des Revolverkopfes einzuklemmen: Die Klemmschraube steht mit einer Gewindebohrung im Werkzeugträger in Eingriff und ragt seitlich bzw. tangential zum Werkzeugträger in die Aussparung; allerdings liegt bei bekannten Ausführungen die genannte Erhöhung bzw. der Buckel zur Bildung der Keilrampe radial außerhalb der Klemmschraube, so daß diese von der Erhöhung teilweise verdeckt und mithin zu ihrer Betätigung nur sehr schwer zugänglich ist.

Folglich wird das der Erfindung zugrundeliegende Problem aufgeworfen, einen Grundhalter für Werkzeugträger unter Vermeidung der genannten Nachteile zu schaffen, der einfach und materialsparend herstellbar ist und eine leichte Handhabung, insbesondere innerhalb einer Werkzeugträger-Aufnahme, ermöglicht. Zur Lösung wird ein Grundhalter mit den eingangs genannten Merkmalen vorgeschlagen, wobei die Anlagefläche innerhalb einer Vertiefung im Basisteil angeordnet ist.

Die Vertiefung läßt sich konstruktiv und herstellungstechnisch leicht bilden. Sie schafft Raum für die Anlagefläche bzw. Keilrampe, wobei ein unnötiger, zusätzlicher Werkstoffverbrauch vermieden ist. Gleichzeitig wird die wirksame Erzeugung einer zum Inneren des Werkzeugträgers gerichteten Klemmkraftkomponente auf das geklemmte Werkzeug, die mit zunehmender Betätigung der Spannmittel zunimmt, beibehalten. Insgesamt läßt sich mit der Erfindung eine kostengünstig herstellbare und das Werkzeug zuverlässig halternde Werkzeug-Kassette aus zweiteiligem Grundhalter und darin eingespanntem Werkzeug bzw. dieses halterndem Stechschwert schaffen; die in die Revolver-Aufnahme eingeschobene Werkzeug-Kassette gemäß Erfindung ist dann komfortabel handhabbar, insbesondere befestigbar.

Eine vorteilhafte Weiterbildung der Erfindung besteht darin, daß die Anlagefläche als Seitenwand einer Nut des Basisteils ausgebildet ist. Die Nut verläuft dabei ggf. tangential bezüglich des Werkzeughalters, um der Keilrampe bzw. der Klemmkraftkomponente die richtige (radiale) Richtung zu erteilen. Eine weitere Verfeinerung dieses Gedankens besteht darin, daß die Vertiefung als Nut mit V-förmigem Querschnitt ausgebildet ist und die Anlagefläche dabei den von dem Werkzeugträger aus gesehen äußeren der beiden Schenkel dieses V-Querschnitts bildet. Dies ist eine für die Praxis besonders zweckmäßige Realisierung, weil der V-Querschnitt einerseits leicht formbar ist und dessen Schenkel die Funktion der Keilrampe erfüllen können.

Um bei in die Werkzeugträger-Aufnahme eingerücktem Basisteil des Grundhalters die Klemmschraube zur Befestigung des Basisteils ungehindert verdrehen zu können, ist nach einer anderen Ausbildung der Erfindung der Basisteil mit einer zwischen dem Werkzeugträger und der Vertiefung angeordneten Klemmfläche für die Auflage des Betätigungskopfes der Klemmschraube versehen, die z. B. die Seitenwand der Aussparung durchsetzend zum Basisteil ragt. Damit kann die dem Spannteil des Grundhalter zugewandte Seite des Basisteils weitgehend eben bzw. plan ausgeführt sein, wobei die ebene Oberfläche lediglich durch die Vertiefung mit der Keilrampe unterbrochen ist.

Weitere Merkmale, Einzelheiten und Vorteile der Erfindung ergeben sich aus der nachfolgenden Beschreibung eines bevorzugten Ausführungsbeispiel der Erfindung sowie anhand der Zeichnung. Darin zeigen:

Fig. 1 eine perspektivische und auseinandergezogene Darstellung eines erfindungsgemäßen Grundhalters sowie eines dazugehörigen Stechschwertes mit geklemmtem, auswechselbarem Schneideinsatz,

Fig. 2 eine perspektivische Darstellung der zusammengesetzten Werkzeug-Kassette gemäß Fig. 1 und

Fig. 3 in Stirnansicht einen ausschnittsweise dargestellten Revolverkopf mit eingesetztem Basisteil des erfindungsgemäßen Grundhalters.

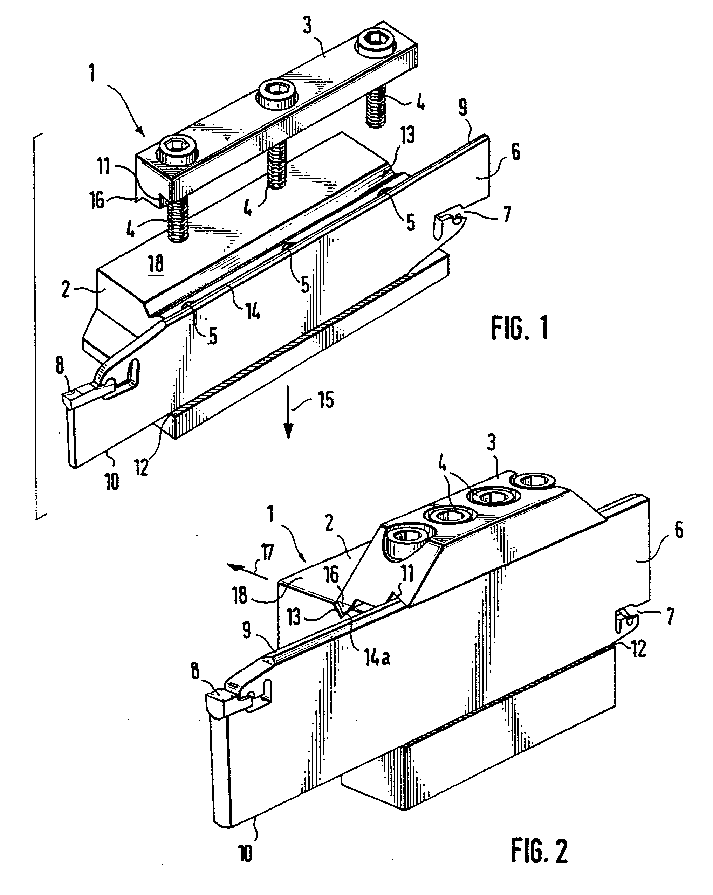

Gemäß Figuren 1 und 2 besteht der erfindungsgemäße Grundhalter 1 aus einem in der Darstellung unteren Basisteil 2 und einem oberen Spannteil 3, welcher von als Schrauben ausgeführte Spannmittel 4 durchsetzt ist. Die Spannmittel bzw. Spannschrauben 4 sind zum Eingriff mit komplementär ausgebildeten Gewindebohrungen 5 im Basisteil 2 auf dessen dem Spannteil 3 zugewandter Seite vorgesehen. Zwischen dem Basisteil 2 und dem Spannteil 3 ist im gezeichneten Beispiel ein schmales, plattenförmiges Stechschwert 6 mit aufspreizbarem Klemmschlitz 7 für auswechselbare Schneideinsätze 8 angeordnet.

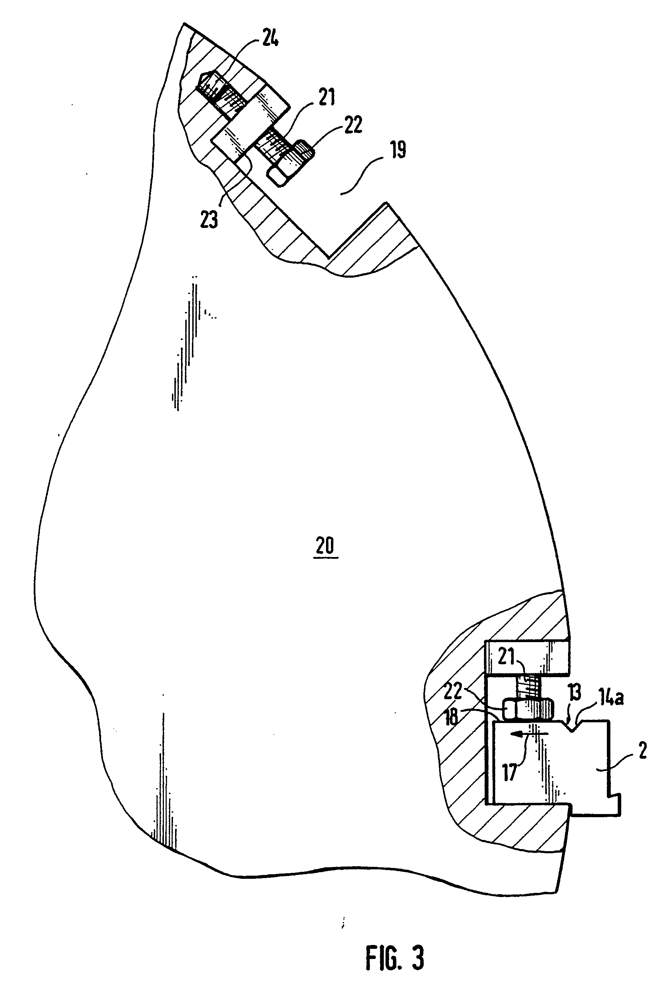

Wie vor allem aus Fig. 2 ersichtlich, ist das Stechschwert 6 derart ausgebildet, daß es zwischen dem Basisteil 2 und dem Spannteil 3 eingespannt werden kann. Hierzu werden der Spannteil 3 die obere Schmalkante 9 des Stechschwertes 6 übergreifend auf den Basisteil 2 aufgelegt, und die durch Löcher im Spannnteil 3 führenden Spannschrauben 4 in ihre zugeordneten Gewindebohrungen 5 eingeschraubt. Die obere und untere Schmalkante 9 bzw. 10 des Stechschwertes 6 sind jeweils von einer oberen am Klemmteil angeformten Auskragung 11 bzw. unteren, am Basisteil 2 angeformten Auskragung 12 umgriffen; zu diesem Zweck sind die Auskragungsteile 11 bzw. 12 jeweils mit einer dem Stechschwert zugewandten, abgeschrägten Auflagefläche versehen. Ferner ist auf der dem Spannteil 3 zugewandte Seite des Basisteils 2 mit einer dessen gesamte Länge durchmessenden Vertiefung bzw. Nut 13 mit etwa V-förmigem Querschnitt ausgebildet. Der dem Stechschwert 6 nächstliegende Schenkel 14 des V-Querschnitts verläuft gegenüber der Kraftwirkungsrichtung 15 der Spannschrauben 4 etwa im spitzen Winkel. Der Spannteil 3 weist auf seiner radial inneren, dem Stechschwert 6 abgewandten Seite einen länglichen Vorsprung 16 mit zur V-Nut 13 angepaßter, vorzugsweise komplementärer Form auf, so daß der Vorsprung 16 nahezu vollständig in die Nut 13 einrücken bzw. auf der anliegen kann. Dabei wird insbesondere eine dem Basisteil 2 und dem Spannteil 3 gemeinsame Anlagefläche 14a gebildet (vgl. Fig. 2), welche bei voneinander gelöstem Basis- und Spannteil 2, 3 dem äußeren V-Schenkel 14 entspricht (vgl. Fig. 1). Die gemeinsame Anlagefläche 14a ergibt für die Spannschrauben 4 bzw. deren ausgeübte Kräfte eine Keilrampe, an der aus den Kraftwirkungen 15 der Spannschrauben 4 eine quer zum Stechschwert 6 gerichtete Klemmkraftkomponente 17 resultiert. Diese führt in Wirkungsverbindung mit der oberen, an der Unterseite abgeschrägten Auskragung 11, mittels welcher der Spannteil 3 das Stechschwert 6 übergreift, eine auch in Radialrichtung eines etwaigen Revolverkopfes (vgl. Fig. 3) sichere Einspannung des Stechschwerts mit dazugehörigen Werkzeug bzw. Schneideinsatz 8 herbei. An der dem Stechschwert 6 abgewandten Seite der V-Nut 13 schließt sich eine ausgedehnte, plane Klemmfläche 18 an, deren Funktionsweise aus Fig. 3 ersichtlich ist.

Ein Vergleich des Ausführungsbeispiels nach Fig. 1 mit dem nach Fig. 2 zeigt, daß es im Rahmen der Erfindung liegt, sowohl drei Spannschrauben als auch vier Spannschrauben 4 vorzusehen; zudem kann der längliche Vorsprung 16 am Spannteil 3 entweder nur eine abgeschrägte Auflagefläche (Fig. 1) oder mehrere, z. B. zwei prismatisch ausgebildete Auflageflächen für das Aufliegen in der Nut 13 aufweisen.

In Fig. 3 ist die Art und Weise der Befestigung des Grundhalters bzw. des zugehörigen Basisteils 2 in der Aufnahme-Aussparung 19 eines Revolverkopfes 20 einer (nicht gezeich neten) Revolverdrehmaschine veranschaulicht: Eine bezüglich des Revolverkopfes 20 etwa tangential gerichtete Klemmschraube 21 ragt mit ihrem Betätigungskopf 22 seitlich in die Aussparung 19 hinein. Sie durchsetzt dabei eine Seitenwand 23 der Aufnahme-Aussparung 19 und ist dort in einer entsprechenden Gewindebohrung durch Drehen verstellbar befestigt. Der Betätigungskopf 22 der Klemmschraube 21 dient deren Verdrehung, wobei er beim Herausdrehen aus der Gewindebohrung 24 in der Seitenwand 23 gegen die Klemmfläche 18 neben der Nut 13 mit der Keilrampenfläche 14a stört. Da die Keilrampenfläche 14a innerhalb der Nut 13 liegt, also vertieft untergebracht ist, ist der Betätigungskopf 22 der Klemmschraube 21 für Verstellwerkzeug leicht zugänglich. Mithin ergibt sich aus dieser erfindungsgemäßen Art der Anordnung der Keilrampenfläche 14a, wenn der dazu komplementär ausgebildete, längliche Vorsprung 16 des Spannteils 3 daran noch nicht anliegt, ein leicht handhabbares Befestigen bzw. Lösen des Basisteils 2 in bzw. aus der Aufnahme-Aussparung 19. Die Klemmkraftkomponente 17, die bei Anlage des Spannteils 3 am Basisteil 2 und Anziehen der Spannschrauben 4 aufgrund der Keilrampenfläche 14a bzw. Anlagefläche 14 (vgl. Fig. 1) entstehen würde, ist in Fig. 3 gestrichelt angedeutet.

## Ansprüche

1. Werkzeug-Grundhalter zur Befestigung in einer Aufnahme-Aussparung eines Werkzeugträgers, insbesondere Revolverkopfes, mit Basisteil und daran durch ein oder mehrere Spannmittel befestigbarem Spannteil, zwischen denen das Werkzeug geklemmt ist, wobei eine radial zum Werkzeugträger gerichtete Klemmkraftkomponente mittels wenigstens einer eine Keilrampe für die Spannmittel bildenden Anlagefläche zwischen Basis- und Spannteil erzeugt wird, dadurch gekennzeichnet, daß die Anlagefläche (14 bzw. 14a) innerhalb einer Vertiefung (13) im Basisteil (2) angeordnet ist.

2. Grundhalter nach Anspruch 1, dadurch gekennzeichnet, daß die Anlagefläche (14) als Seitenwand einer Nut (13) des Basisteils (2) ausgebildet ist.

3. Grundhalter nach Anspruch 1 oder 2, dadurch gekennzeichnet, daß die Vertiefung als Nut (13) mit V-förmigem Querschnitt ausgebildet ist, und die Anlagefläche (14a) den radial äußeren (14) der beiden Schenkel des V-Querschnitts bildet.

4. Grundhalter nach einem der vorhergehenden Ansprüche, dadurch gekennzeichnet, daß der Basisteil (2) eine zwischen dem Werkzeugträger (20) und der Vertiefung (13) angeordnete Klemmfläche (18) für die Auflage des Betätigungskopfes (22) einer Klemmschraube (21) aufweist, die in die Aussparung (19) ragt.

FIG. 1

FIG. 2

**FIG. 3**